# EUROPEAN PATENT APPLICATION

(11) **EP 1 517 522 A2**
(43) Date of publication of application: **23.03.2005**
(21) Application number: 04015492.4
(22) Date of filing: 01.07.2004
(51) Int. Cl.: H04M 1/27, H04M 1/247

(54) **Mobile terminal and method for providing a user-interface using a voice signal**

(30) Priority: 17.09.2003 KR 2003064493
(71) Applicant: Samsung Electronics Co., Ltd., Suwon-si, Gyeonggi-do (KR)
(72) Inventor: Choi, Hye-Rym, Yeongtong-gu, Suwon-si, Gyeonggi-do (KR)
(74) Representative: Grünecker, Kinkeldey, Stockmair & Schwanhäusser Anwaltssozietät

(57) **Abstract**

A mobile terminal and a method for providing a user-interface using a voice signal. By providing a user-interface using a voice signal, a voice signal can be input to the mobile terminal and user interfacing is facilitated in all devices that provide user-interfaces using navigation keys of mobile terminals. In addition, the probability of operation errors caused by voice recognition errors can be reduced in the mobile terminal or the devices. The resulting simple manipulation of the mobile terminal leads to increased user friendliness.

## Description

The present invention relates generally to a method for providing a user-interface, and in particular, to a method and a mobile terminal for providing a user-interface using a voice signal.

Recently, mobile terminals have been enabled to trigger functions with voice commands.

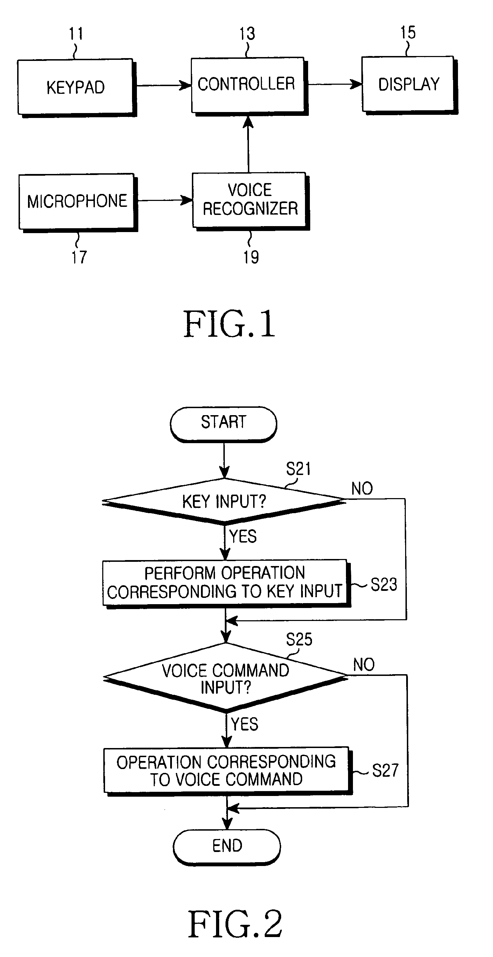

FIG 1 is a schematic block diagram illustrating a conventional mobile terminal capable of controlling function invocation with voice commands. Referring to FIG 1, the mobile terminal comprises a keypad 11, a controller 13, a display 15, a microphone 17, and a voice recognizer 19. Because processing related with voice and key input in the mobile terminal is focused on in FIG 1, a transmitter/receiver for radio communication is not shown.

The keypad 11 and the microphone 17 receive a key signal and a voice signal, respectively, for controlling the operation of the mobile terminal. The voice recognizer 19 recognizes the voice received from the microphone 17 and determines a command corresponding to the voice. The controller 13 operates accordingly in response to a command received form the keypad 11 and the voice recognizer 19. The display 15 displays the operation state of the controller 13.

FIG 2 is a flowchart illustrating a command process in the mobile terminal. Referring to FIGs. 1 and 2, the controller 13 determines whether there is a key input from the keypad 11 in step S21. In the presence of the key input, the controller 13 controls an operation corresponding to the key input to be performed in step S23. In addition, the controller 13 determines whether a voice command has been received from the microphone 17 in step S25. Upon input of the voice command, the controller 13 determines an operation corresponding to the voice command received through the voice recognizer 19 and controls the operation to be performed in step S27.

For example, if a user speaks "company" into the microphone 17 to dial his office number through his mobile terminal, the voice recognizer 19 searches an internal memory for a phone number corresponding to the voice command "company" and provides it to the controller 13. The controller 13 then controls dialing the phone number. Accordingly, the user can dial an intended place with a voice command without pressing keys.

In this conventional voice command-triggered operation, however, carrying out a function corresponding to a voice command depends on the performance of the voice recognizer 19. For example, if the voice recognizer 19 has a low voice recognition rate, or the user makes his speech unclear, the voice command may not be recognized normally, thereby degrading the performance of carrying out an operation with a voice command.

It is the object of the present invention to provide a method and a mobile terminal for reducing a probability of operation errors caused by voice recognition errors.

This object is solved by the subject matter of the independent claims. Preferred embodiments are defined in the dependent claims.

An aspect of the present invention is to provide a method and a mobile terminal for facilitating user interfacing using a voice signal.

A further aspect of the present invention is to provide a mobile terminal and a method for facilitating user manipulation.

The above object and other aspects are achieved by a mobile terminal and a method for providing a user-interface using a voice signal.

In the mobile terminal, a memory stores key signals corresponding to voice commands therein, a microphone receives a voice command, a voice recognizer recognizes the voice command received through the microphone according to the information stored in the memory, and a key signal converter converts the voice command to a key signal corresponding to the voice command according to the voice recognition of the voice recognizer.

Additionally, in the user-interface providing method, a key signal corresponding to a voice command is searched for upon receipt of the voice command, and the voice command is converted to the searched key signal.

The above features and advantages of the present invention will become more apparent from the following detailed description when taken in conjunction with the accompanying drawings in which:
FIG 1 is a schematic block diagram of a conventional mobile terminal;
FIG 2 is a flowchart illustrating a command process in the mobile terminal;
FIG 3 is a schematic block diagram of a mobile terminal according to an embodiment of the present invention;
FIG 4 illustrates information stored in a voice database (DB) in the mobile terminal according to an embodiment of the present invention;
FIG 5 is a flowchart illustrating a user-interface providing method according to an embodiment of the present invention; and
FIGs. 6A to 6E are screen displays illustrating the user-interface providing method using a voice signal according to an embodiment of the present invention.

Preferred embodiments of the present invention will be described herein below with reference to the accompanying drawings. In the following description, well-known functions or constructions are not described in detail since they would obscure the invention in unnecessary detail.

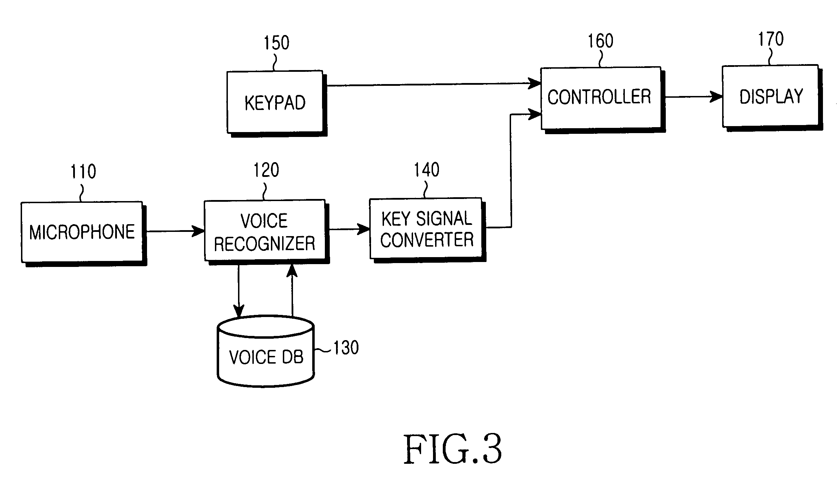

FIG 3 is a block diagram of a mobile terminal according to an embodiment of the present invention. Referring to FIG 3, the mobile terminal includes a microphone 110, a voice recognizer 120, a voice DB 130 (or memory), a key signal converter 140, a keypad 150, a controller 160, and a display 170. Because processing related with voice and key input in the mobile terminal is focused on in FIG 3, a transmitter/receiver for radio communication is not shown.

In FIG 3, the microphone 110 receives a voice command for controlling an operation of the mobile terminal. Obviously, the microphone 110 also receives a voice signal for a phone call. In the present invention, the microphone 110 preferably receives a voice command corresponding to a navigation key or a digit key to control the operation of the mobile terminal.

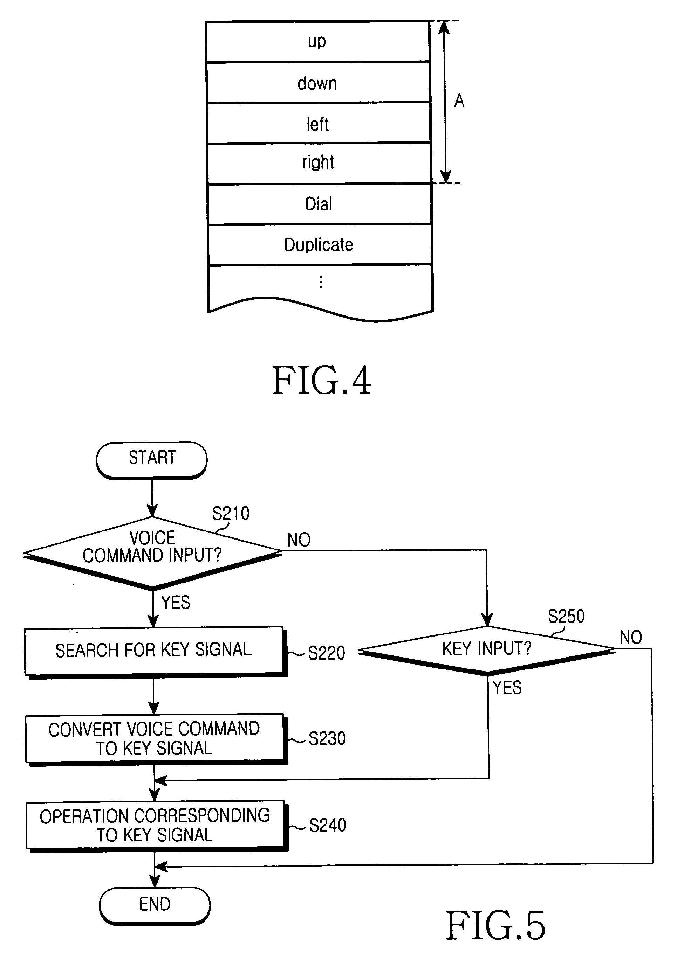

The voice recognizer 120 recognizes the voice command received through the microphone 110. That is, the voice recognizer 130 recognizes a key signal corresponding to the voice command referring to information stored in the voice DB 130. The voice DB 130 stores key signals corresponding to voice commands. Particularly, the voice DB 130 stores and manages key signal information in such a manner that a voice signal corresponding to an up/down/left/right navigation key or a digit key is detected first of all. That is, the voice DB 130 stores/manages key signal information in the manner as illustrated in FIG 4.

FIG 4 illustrates an example of information stored in the voice DB 130 in the mobile terminal according to an embodiment of the present invention. Referring to FIG 4, voice signals corresponding to up, down, left, and right navigation keys are first stored in a search area A so that they can be detected first. Aside from the navigation keys or digit keys, the voice DB 130 can stores all other key signals that a user can enter, for example, * or # as key signals corresponding to voice commands. More preferably, the voice DB 130 can store physical hard keys and soft keys displayed on an LCD (Liquid Crystal Display) as voice command key signals.

The key signal converter 140 converts the input voice command to a key signal according to the voice recognition result in the voice recognizer 120.

The keypad 150 generates key signals for controlling the operation of the mobile terminal. The controller 160 performs an operation corresponding to a command received through the keypad 150 and the key signal converter 140. The display 170 displays the process result of the controller 160.

FIG 5 is a flowchart illustrating a user-interface providing method according to an embodiment of the present invention. Referring to FIGs. 3 and 5, the user-interface providing method will be described below.

Upon receipt of a voice command through the microphone 110 in step S210, the voice recognizer 120 searches the voice DB 130 for a key signal corresponding to the voice command in step S220. When the voice recognizer 120 feeds the search result to the key signal converter 140, the key signal converter 140 converts the voice command received in step S210 to the key signal searched in step S220, in step S230.

For example, if a voice command corresponding to an up/down/left/right navigation key is received through the microphone 110, the voice recognizer 120 searches the voice DB 130 for a corresponding key signal and notifies the key signal converter 140 of the searched key signal. The key signal converter 140 converts the voice command to the key signal. When the user speaks a voice command corresponding to a digit key (one of 1, 2, ..., 9), the voice command is processed in the same manner.

The controller 160 controls an operation corresponding to the key signal received from the key signal converter 140 to be performed in step S240. Because the controller 160 receives the converted key signal from the key signal converter 140, it performs the control operation in the same way as a key input-based control operation.

However, if a key input is entered through the keypad 150 in step S250, the controller 160 also controls an operation corresponding to the key input to be performed in step S240.

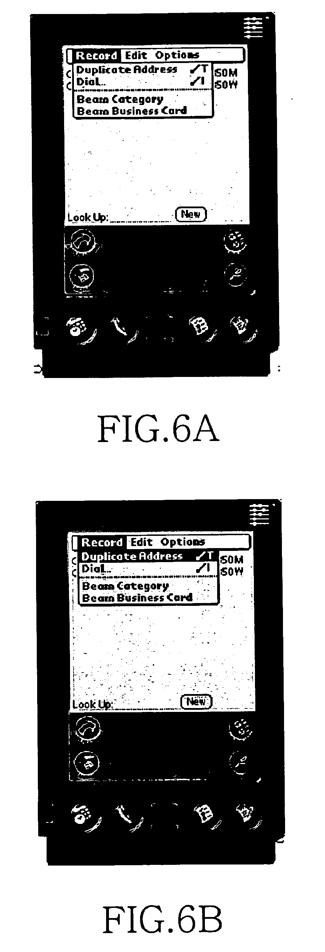

FIGs. 6A to 6E are screen displays for describing the user-interface providing method using a voice signal according to the embodiment of the present invention. A Palm OS (Operation System) for a PDA (Personal Digital Assistant) is shown as an example. However, the use of Palm OS and the PDA is a mere exemplary application, and thus the present invention is not limited to the OS of the PDA.

FIG 6A displays a state where a menu is displayed on the screen of the mobile terminal using a menu activating command (e.g. "Menu"). If there are a plurality of menus in a default menu bar, the leftmost menu item is usually selected as the present menu item. Here, "Record" is selected.

FIG 6B illustrates a screen displayed when the user speaks "down" or another voice command for performing the same action, e.g., "eight", instead of entering a down key (↓). In FIG 6B, a menu select bar has moved to the first sub-menu item, Duplicate Address, under Record in response to the voice command.

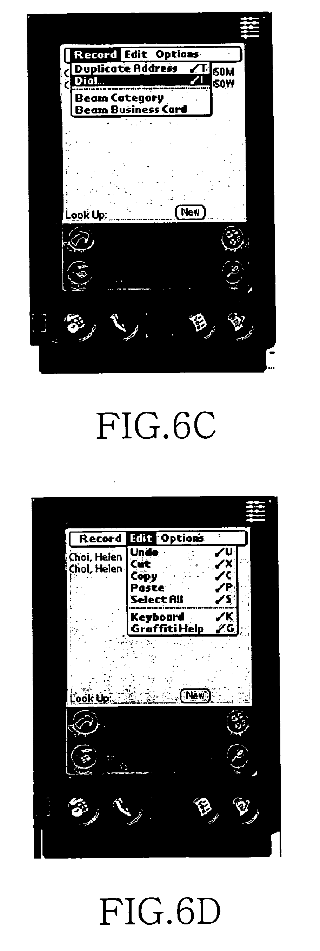

FIG 6C illustrates a screen display in which the menu select bar has moved down in response to "down" or another voice command in the same sense spoken by the user in the screen display of FIG 6B. In FIG 6C, the menu select bar has moved to the second sub-menu item, Dial, under Record in response to the voice command.

FIG 6D illustrates a screen display in which a menu item, Edit, to the right from the present menu item, Record, has been selected in response to "right" or another voice command for performing the same action, e.g., "six", spoken by the user in the screen display illustrated in FIG 6A, 6B, or 6C.

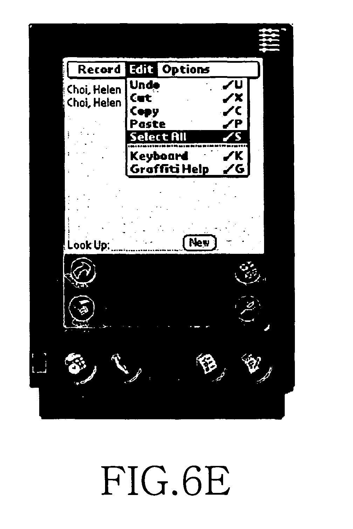

FIG 6E illustrates a screen display in which the menu select bar has moved down five items according to five occurrences of "down" or another voice command in the same sense spoken by the user in the screen display of FIG 6D. In this case, if digit keys corresponding to the absolute positions of the sub-menu items (i.e. Undo, Cut, Copy, Paste, Select All, ...) under Edit were stored, the menu select bar can moved to an intended menu item at one time by speaking a voice command corresponding to a digit key corresponding to the absolute position of the menu item. For example, if digit keys 1 to 5 are mapped to Undo, Cut, Copy, Paste, and Select All, the user can move the menu select bar to Select All at one time by speaking "5".

In accordance with the present invention as described above, providing a user-interface using a voice signal enables input of a voice signal to a mobile terminal and facilitates user interfacing in all devices that provide user-interfaces using navigation keys of mobile terminals. In addition, the probability of operation errors caused by voice recognition errors can be reduced in the mobile terminal or the devices. Because voice keywords corresponding to direction keys are positioned in a leading part of a voice DB, time required to search for information corresponding to the voice command is reduced as compared to a conventional voice DB, thereby shortening time for voice recognition. The resulting simple manipulation of the mobile terminal leads to user friendliness.

While the present invention has been shown and described with reference to a certain preferred embodiment thereof, it is a mere exemplary application. More specifically, while the present invention has been described in the context of a mobile terminal in the above description, it is not limited to the mobile terminal, but applicable to any of devices that allow voice signal input and provide a user-interface. Thus, it will be understood by those skilled in the art that various changes in form and details may be made therein without departing from the scope of the invention as defined by the appended claims.

## Claims

1. A method for providing a user-interface in a mobile terminal, comprising the steps of:
searching for a key signal corresponding to a voice command, upon receipt of the voice command; and
converting the voice command to the searched key signal.

2. The method of claim 1, further comprising the step of inputting a voice command corresponding to a navigation key.

3. The method of claim 2, wherein the input voice command indicates one of up, down, left, and right direction entries.

4. The method of claim 1, further comprising the step of inputting a voice command corresponding to a digit key.

5. The user-interface providing method of claim 1, wherein the key signal corresponding to the voice command is one of a hard key and a soft key.

6. A mobile terminal comprising:
a memory for storing voice commands corresponding to key signals;
a microphone for receiving the voice commands;
a voice recognizer for recognizing the voice commands received through the microphone according to information stored in the memory; and
a key signal converter for converting the voice commands to key signals corresponding to the voice commands according to the recognized voice commands of the voice recognizer.

7. The mobile terminal of claim 6, wherein the memory stores the voice commands corresponding to the key signals so that a voice signal corresponding to a navigation key is first detected.

8. The mobile terminal of claim 7, wherein the memory stores the voice commands corresponding to the key signals so that a voice signal corresponding to one of up, down, left, and right direction entries is first detected.

9. The mobile terminal of claim 6, wherein the memory stores the voice commands corresponding to the key signals so that a voice signal corresponding to a digit key is first detected.

10. The mobile terminal of claim 6, wherein the key signal corresponding to the voice command is one of a hard key and a soft key.

11. The mobile terminal of claim 6, wherein the microphone receives a voice command corresponding to a navigation key.

12. The mobile terminal of claim 11, wherein the microphone receives a voice command corresponding to one of up, down, left, and right direction entries.

13. The mobile terminal of claim 6, wherein the microphone receives a voice command corresponding to a digit key.
